# EUROPÄISCHE PATENTSCHRIFT

(11) **EP 2 022 248 B1**
(45) Veröffentlichungstag und Bekanntmachung des Hinweises auf die Patenterteilung: **22.11.2017**
(21) Anmeldenummer: 07726358.0
(22) Anmeldetag: 13.02.2007
(51) Int. Cl.: H04M 3/533

(54) **VERFAHREN, NOTFALLANORDNUNG UND NOTRUFZENTRALE ZUR BEHANDLUNG VON NOTRUFEN VON EINEM KOMMUNIKATIONSENDGERÄT**
METHOD, EMERGENCY SYSTEM AND EMERGENCY CALL CENTER FOR HANDLING EMERGENCY CALLS FROM A COMMUNICATION TERMINAL
PROCÉDÉ, DISPOSITIF DE SECOURS ET CENTRALE D'APPELS DE SECOURS POUR LE TRAITEMENT DES APPELS DE SECOURS PAR UN TERMINAL DE COMMUNICATION

(30) Priorität: 31.05.2006 DE 102006025363
(43) Veröffentlichungstag der Anmeldung: 11.02.2009
(73) Patentinhaber: Unify GmbH & Co. KG, 80807 München (DE)
(72) Erfinder: BOZIONEK, Bruno, 33178 Borchen (DE); KLAUS,Dieter, 33129 Delbrück (DE); NIEMEIER, Hubert, 33106 Paderborn (DE)
(74) Vertreter: Fritzsche, Thomas
(86) Internationale Anmeldenummer: PCT/EP2007/051402
(87) Internationale Veröffentlichungsnummer: WO 2007/137882

(56) Entgegenhaltungen:
- EP-A- 1 189 470
- WO-A1-01/17302
- US-A1- 2003 028 536
- US-A1- 2003 143 974

## Beschreibung

Ein Notruf ist eine Verbindung von einem Kommunikationsendgerät, meist zu einer Notrufzentrale, um in einem Notfall professionelle Hilfe wie Rettungsdienst, Feuerwehr oder die Polizei zu alarmieren. Hierzu können sowohl spezielle Notfallendgeräte (sog. Notruftelefone), aber auch übliche drahtgebundene oder drahtlose Kommunikationsendgeräte verwendet werden.

Bei der Notrufzentrale kann es sich z.B. um eine Werkschutzzentrale oder eine öffentliche Notrufzentrale handeln. Diese Notrufzentrale nimmt den Notruf des Kommunikationsendgerätes entgegen und bearbeitet diesen. Üblicherweise werden dabei von der Notrufzentrale folgende Informationen abgefragt:
- Wo ist der Notfall geschehen?
- Was ist geschehen?
- Wieviele Personen sind betroffen?
- Welche Art eines Notfalls liegt vor?

Außerdem werden hierbei weitere Informationen, wie etwa der Zeitpunkt des Notrufes, die Identität des Anrufers und die Rufnummer des notrufenden Kommunikationsendgeräts und Ähnliches erfasst.

Erfolgt der Notruf beispielsweise von einem öffentlichen Fernsprecher oder von einem Mobiltelefon, ist in vielen Fällen zwar eine automatische, jedoch meist ungenaue Positionsbestimmung des notrufenden Kommunikationsendgerätes möglich.

So ist es im Falle eines Notrufes von einem Mobiltelefon für die Notrufzentrale möglich, mit Hilfe von Informationen des Mobilfunknetzbetreibers die ungefähre Position des Mobiltelefons einzugrenzen. Dies erfolgt, indem die Basisstation, von der aus das Mobiltelefon die Verbindung mit dem Mobilfunknetz hergestellt hat, ermittelt wird. Denn deren genauer Standort ist bekannt. Da die Genauigkeit der Positionsbestimmung von der Größe der von der Basisstation versorgten Funkzelle des Mobilfunknetzes abhängt, lässt sich damit der Standort des notrufenden Mobiltelefons in Städten nur mit einer Ungenauigkeit von 100 m bis 1600 m, und auf dem Land nur mit einer Ungenauigkeit von bis zu 24 km feststellen. Dabei lässt sich lediglich ermitteln, ob sich ein Mobiltelefon in einer Funkzelle befindet, nicht jedoch *wo* in einer Funkzelle sich das Mobiltelefon genau befindet.

Im Falle eines Notrufes von einem öffentlichen Fernsprecher kann dessen Position z.T. über die Abfrage einer Datenbank ermittelt werden, in der eine Positionsinformation des öffentlichen Fernsprechers gespeichert ist. Ähnliches gilt auch für einen Notruf von einem Kommunikationsendgerät innerhalb eines nicht-öffentlichen Kommunikationsnetzes, z.B. einem Unternehmenskommunikationsnetz. Auch hier ist es möglich, eine solche Datenbank zu betreiben und so die Position des notrufenden Kommunikationsendgeräts zu ermitteln. Bei den in solchen Datenbank gespeicherten Informationen handelt es sich in aller Regel um dauerhaft gespeicherte, bzw. statische Positionsinformationen.

Jedoch ist für ein effektives Notfallmanagement durch die Notrufzentrale eine möglichst aktuelle, genaue Bestimmung des Ortes des Notfalles von entscheidender Bedeutung, um entsprechende aktuelle, genaue und umfassende Informationen an die Rettungskräfte übermitteln zu können.

Dennoch beziehen sich die Informationen, die der Notrufzentrale und den Rettungskräften zur Verfügung stehen, weitgehend auf die soeben beschriebenen statischen Positionsinformationen aus einer solchen Datenbank und den zusätzlichen Informationen, die der Notrufende auf Nachfrage über sein Kommunikationsendgerät an die Notrufzentrale übermitteln kann.

Darüber hinaus stehen häufig keine weiteren Informationen für die Notrufzentrale zur Verfügung. Sie ist hiermit auf diese Informationen beschränkt, um über einen Rettungseinsatz zu entscheiden, diesen zu planen und auszuführen.

Aus der Offenlegungsschrift DE 102 54 623 A1 ist ein mobiles Endgerät, sowie ein Notruf-Kommunikationssystem bekannt, bei dem bei einem Notruf von einem mobilen Kommunikationsendgerät in einem Mobilfunknetz die Auswahl der Rettungsleitstelle, an die der Notruf geleitet wird, in Abhängigkeit von vom Mobilfunknetz bereitgestellten, den ungefähren Aufenthaltsort des mobilen Kommunikationsendgerätes kennzeichnenden Daten erfolgt.

Aus der WO 01/17302 A1 ist des Weiteren ein Notrufsystem bekannt, bei dem in einem Telekommunikationsnetz eine Notrufmeldung von einem Mobilteilnehmer erzeugt wird, die vorerst automatisch an Mobilgeräte, die sich in der Umgebung des Mobilfunkteilnehmers bzw. in der gleichen Funkzelle befinden, verbreitet wird. Anschließend wird die Notrufmeldung an vom benannten Teilnehmer vordefinierte Endgeräte im Telekommunikationsnetz weitergeleitet. Die Position der benannten Mobilfunkgeräte wird innerhalb einer Zelle des Telekommunikationsnetzes durch ein Standortbestimmungssystem ermittelt und die Notrufmeldung vorerst auf Basis der Positionsangabe an andere Mobilfunkgeräte in der Funkzelle verbreitet.

Bei der US 2003/0143974 A1 wird eine Notfallnachricht erzeugt und an alle Mobilfunkstationen in einem betroffenen Gebiet übertragen, um die Benutzer vor unmittelbar bevorstehenden Gefahren zu warnen, wie gefährliche Wetterberichte vom "National Weather Service". Die Notfallnachricht wird von einem drahtlosen Kommunikationssystem empfangen, welches die geographische Region der Nachricht bestimmt, das dann die Nachricht an alle Mobilstationen innerhalb der betroffenen Region überträgt.

Bei der US 2003/0028536 A1 wird ein proaktives Notfallreaktionssystem für eine Polizeidienststelle vorgestellt, welches einen zentralen Server, ein Dispatcher-Terminal und eine Vielzahl von mobilen Datenterminals (MDT) umfasst, die mit dem System verbunden sind. Der zentrale Server verarbeitet eingehende Anrufe für Rettungsdienste und ausgehende Nachrichten von dem Dispatcher Terminal. Basierend auf der Versandnachricht für den ankommenden Anruf fragt der zentrale Server automatisch eine Vielzahl von Datenbanken nach einem vorbestimmten Satz von Regeln ab, um Informationen, die für das in einem Fahrzeug zum Notfalleinsatz ausgesandte Personal und deren Ausrüstung relevant sind. Basierend auf den erhaltenen Informationen, sendet der zentrale Server automatisch entsprechende Meldungen und Warnungen an die MDTs, die zu dem Ort der Notsituation fahren.

Der Erfindung liegt die Aufgabe zugrunde, im Fall eines Notrufs von einem Kommunikationsendgerät die Behandlung des Notrufes zu verbessern. Die Aufgabe wird durch die Merkmale der Ansprüche 1, 11 und 15 gelöst.

Ein wesentlicher Vorteil des erfindungsgemäßen Verfahrens besteht darin, dass in einer Notrufzentrale zunächst die Position des notrufenden Kommunikationsendgerätes aktuell erfasst wird. Um diese erfasste Position des notrufenden Kommunikationsendgeräts wird ein Gefahrenbereich in Abhängigkeit von der Natur des Notrufs definiert, um weitere Kommunikationsendgeräte im Gefahrbereich zu identifizieren. Es werden Notfallinformationen gebildet und an alle oder ausgewählte identifizierte Kommunikationsendgeräte von betroffenen Personen oder Rettungskräften im definierten Gefahrenbereich zielgerichtet übermittelt.

Weitere vorteilhafte Weiterbildungen des erfindungsgemäßen Verfahrens sowie einer erfindungsgemäßen Notfallanordnung und einer erfindungsgemäßen Notrufzentrale sind den weiteren Ansprüchen zu entnehmen.

Im Folgenden wird das erfindungsgemäße Verfahren anhand von zeichnerischen Darstellungen näher erläutert.

Dabei zeigen:
- Figur 1: einen Übersichtsplan eines Firmengeländes,
- Figur 2: einen Gebäudelageplan,
- Figur 3: einen Detailplan eines Gebäudeteils, und
- Figur 4: eine schematische Darstellung eines Kommunikationsnetzes KN.

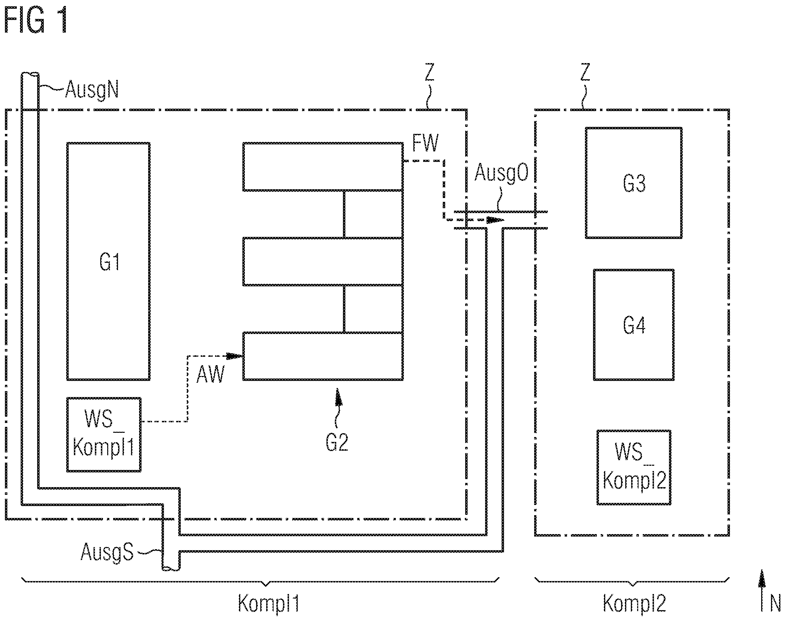

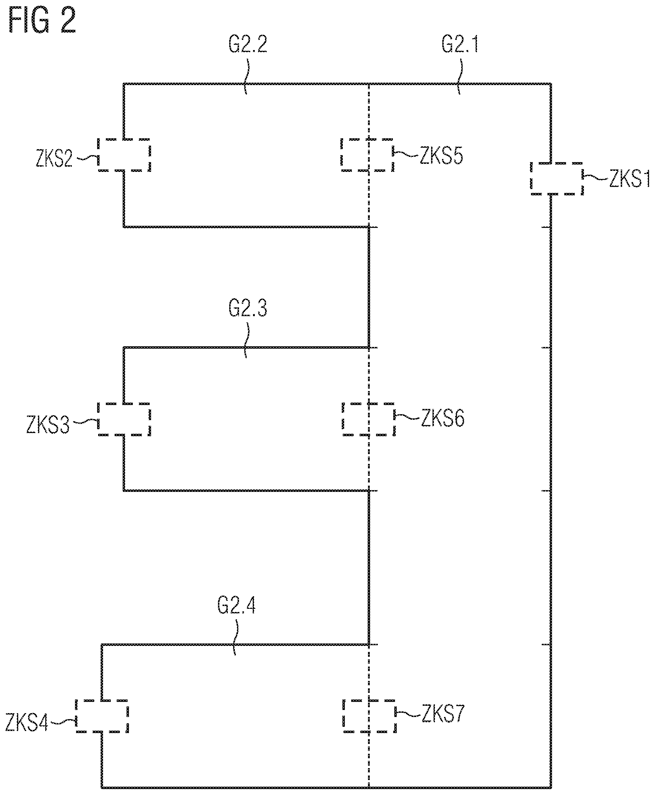

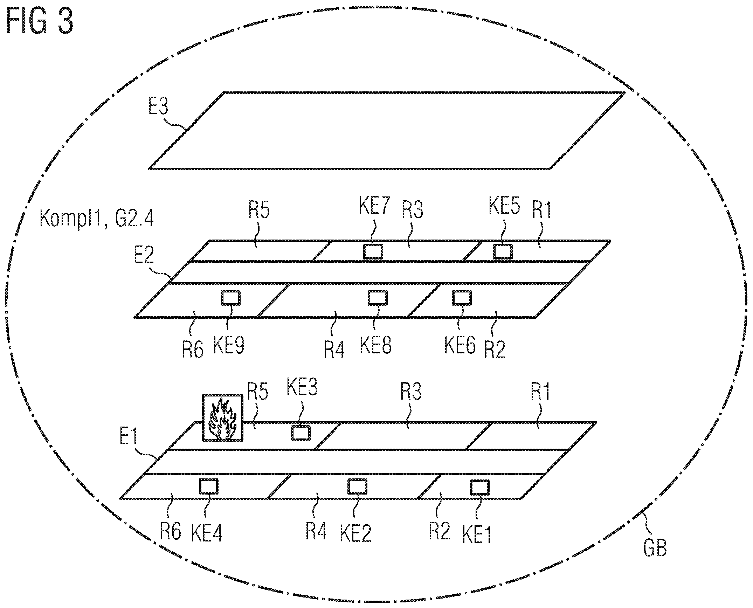

Die Figur 1 zeigt schematisch eine Notfallanordnung mit einem Firmengelände, auf dem sich zwei mit Kompl1, Kompl2 bezeichnete Gebäudekomplexe befinden. Der erste Gebäudekomplex Kompl1 besteht aus drei Gebäuden. Davon sind zwei Gebäude jeweils mit G1 und G2 bezeichnet. Das erste Gebäude G1 ist ein in Nord-Süd Richtung verlaufender Gebäuderiegel. Weitere Einzelheiten zum zweiten Gebäude G2 ergeben sich aus Figur 2. Das zweite Gebäude G2 verfügt ebenfalls über einen in Nord-Süd Richtung verlaufenden Gebäuderiegel G2.1, darüber hinaus hat Gebäude G2 jedoch auch noch drei quer in Ost-West Richtung verlaufende Seitenflügel G2.2, G2.3, G2.4, siehe Figur 2. Das erste Gebäude G1 ist ein einstöckiges Gebäude, während das zweite Gebäude G2 einschließlich des Längs- und der Seitenflügel G2.1 und G2.2, G2.3, G2.4 drei Stockwerke, bzw. Etagen E1...E3 aufweist, siehe Figur 3.

Außerdem befindet sich bei dem ersten Gebäudekomplex Kompl1 ein mit WS_Kompl1 bezeichnetes Gebäude des Werkschutzes, Figur 1. Der erste Gebäudekomplex Kompl1 ist - wie auch der weitere zweite Gebäudekomplex Komp12 - durch einen Zaun Z von der Umgebung abgeschirmt. Der erste Gebäudekomplex Kompl1 verfügt über insgesamt drei Ausgänge, einen nördlichen AusgN, einen östlichen AusgO und einen südlichen AusgS. Südlich, außerhalb des Gebäudekomplexes jenseits des Zaunes, befindet sich eine Rettungsstelle der örtlichen, öffentlichen Feuerwehr, nicht dargestellt.

Auf dem zweiten Gebäudekomplex Komp12 befinden sich ein drittes und viertes Gebäude G3 und G4 und ein weiteres Gebäude des Werkschutzes WS Kompl2, siehe Figur 1.

Das zweite Gebäude G2 verfügt über vier Ausgänge, die jeweils mit Zugangskontrollsystemen ZKS1...ZKS4 ausgestattet sind, siehe Figur 2. Bei diesem Zugangskontrollsystemen ZKS1...ZKS4 müssen sich alle Personen, die das zweite Gebäude G2 betreten wollen, individuell - etwa mit ihrem Dienstausweis - identifizieren. Gästen, die über keinen eigenen Dienstausweis verfügen, wird beispielsweise ein Gastausweis ausgehändigt, mit dem sie sich gegenüber einem der Zugangskontrollsysteme ZKS1...ZKS4 identifizieren können. Die Zugangskontrollsysteme ZKS1...ZKS4 erfassen und speichern beispielsweise Informationen wie Identität der Zutrittsperson, Zeitpunkt des Gebäudeeintritts und Zeitpunkt des Gebäudeaustritts. Darüber hinaus sind außerdem jeweils an den Übergängen von den Seitenflügeln G2.2, G2.3 und G2.4 zum Gebäuderiegel G2.1 solche gleichartige Zutrittskontrollsysteme ZKS5...ZKS7 installiert, siehe Figur 2.

In dem Seitenflügel G2.4 befinden sich auf den Etagen 1 und 2 jeweils insgesamt sechs mit R1...R6 bezeichnete Räume, siehe Figur 3. In diesen Räumen befinden sich die Kommunikationsendgeräte KE1...KE4, die in einem Kommunikationsnetz KN - in Figur 3 nicht dargestellt - angeordnet sind. Hierbei ist das erste Kommunikationsendgerät KE1 im zweiten Raum R2, das zweite Kommunikationsendgerät KE2 im vierten Raum R4, das dritte Kommunikationsendgerät KE3 im fünften Raum R5 und das vierte Kommunikationsendgerät K4 im sechsten Raum R6 jeweils an das Kommunikationsnetz KN angeschlossen.

Für das Ausführungsbeispiel sei angenommen, dass im ersten Gebäudekomplex Kompl1, im zweiten Gebäude G2, Seitenflügel G2.4, erste Etage E1, im fünften Raum R5 ein Feuer ausbricht, siehe Figur 3.

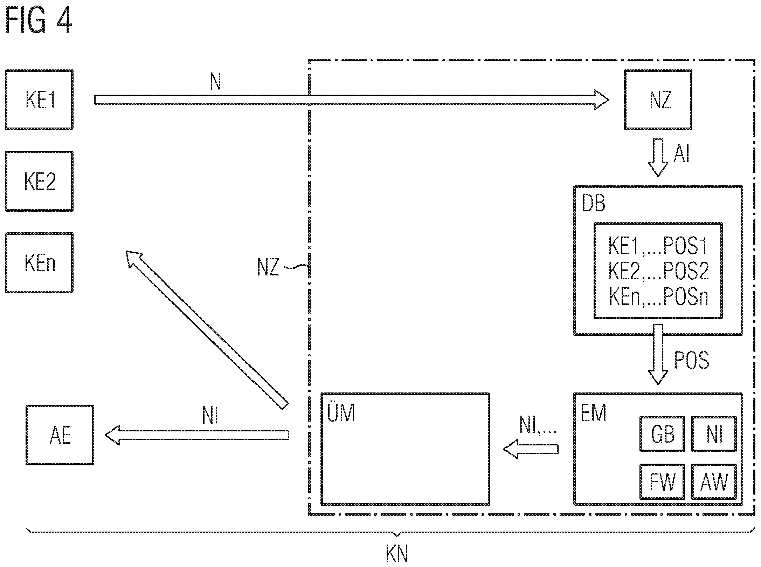

Aufgrund des Feuerausbruchs erfolgt von dem dritten drahtgebundenen Kommunikationsendgerät KE3 ein Notruf. Die verwendete Rufnummer ist einer im Kommunikationsnetz KN angeordneten Notrufzentrale NZ - beispielsweise in Gebäude des Werkschutzes WS Kompl1 - zugeordnet, Figur 4.

In der Figur 4 ist der Notruf mit einem mit N bezeichneten Pfeil dargestellt. In der Notrufzentrale NZ wird der Notruf N als solcher erfasst.

Ebenfalls im Kommunikationsnetz KN verwirklicht ist eine in der Figur 4 mit DB bezeichnete Datenbank. In ihr sind sowohl die im Kommunikationsnetz KN angeordneten Kommunikationsendgeräte KE1...KEn, ihre Rufnummern als auch eine ihre Position repräsentierende Positionsinformation POS1..POSn gespeichert. Die Positionsinformation POS1..POSn kann dabei beispielsweise geografische Informationen über den Gebäudekomplex Gkompl, Gebäudebezeichnungen G oder Gebäudeteilbezeichnungen, Flure, Räume R, Etagen E oder ähnliches enthalten.

Im Zuge der Behandlung des Notrufs N wird erfindungsgemäß von der Notrufzentrale NZ eine Abfrageinformation AI gebildet und an die Datenbank DB übermittelt, um die in der Datenbank DB gespeicherten, relevanten Kommunikationsendgeräte- und Positionsinformationen KE1..KEn, POS1..POSn abzufragen. Hierbei wird unter Verwendung der dem notrufenden dritten Kommunikationsendgerät KE3 zugeordneten Rufnummer dessen Position POS3 ermittelt.

Nunmehr wird mittels eines ebenfalls im Kommunikationsnetz KN verwirklichten Ermittlungsmoduls EM auf Grundlage der Positionsinformation POS3 des dritten Kommunikationsendgerätes KE3 ein Gefahrenbereich definiert und eine entsprechende Bereichsinformation GB gebildet, siehe Figuren 3 und 4. Dabei können neben der Positionsinformation POS3 weitere, im Zuge des Notrufes N ermittelte Informationen, wie z.B. die Natur des Notfalles - im Ausführungsbeispiel der Brand in dem Seitenflügel G2.4, fünfter Raum R5 - berücksichtigt werden, die von der Notrufzentrale NZ übermittelt werden. In dem Ausführungsbeispiel etwa könnte auf Grundlage der Informationen, die der Notrufzentrale NZ über das Feuer im fünften Raum R5 zur Verfügung stehen, der Gefahrenbereich GB so definiert werden, dass dieser die Etagen E1, E2 und E3 des Gebäudeseitenflügels Kompl1, G2.4 umfasst, siehe Figur 3.

Erfindungsgemäß wird dann im Ermittlungsmodul EM ermittelt, welche Kommunikationsendgeräte KE auszuwählen sind, um über sie potentiell gefährdete Personen oder Rettungskräfte über die Gefahrensituation zu informieren und welche Informationen an diese Kommunikationsendgeräte KE gesendet werden.

Was die Auswahl der zu informierenden Kommunikationsendgeräte KE angeht, so können dies beispielsweise alle Kommunikationsendgeräte KE sein, die sich in dem definierten Gefahrenbereich GB befinden. Welche das sind, lässt sich beispielsweise über eine weitere Abfrage AI der Datenbank DB ermitteln. Alternativ wäre es aber auch möglich, die zu informierenden Kommunikationsendgeräte KE nach weiteren Kriterien auszuwählen. Möglich wäre es, alle Kommunikationsendgeräte KE auszuwählen, die sich in durch die Gefahrensituation betroffenen, an die Gefahrenstelle angrenzende Räumen R oder Gebäudeteilen befinden. So würde es sich im Ausführungsbeispiel anbieten, aufgrund des Feuers im fünften Raum R5 auf der ersten Etage E1 alle Kommunikationsendgeräte KE auszuwählen, die sich in der ersten, zweiten und dritten Etage E1, E2 und E3 des Seitenflügels G2.4 befinden.

Erfindungsgemäß kann hierzu beispielsweise eine spezielle Abfrage der Datenbank DB erfolgen, um zu ermitteln, welche Kommunikationsendgeräte KE sich im definierten Gefahrenbereich GB befinden.

Vorteilhaft wäre eine Abfrage des Zugangskontrollsystems ZKS denkbar. Hierdurch wäre es möglich, alle Personen zu ermitteln, die sich aktuell im Bereich der Gefahrensituation aufhalten, da Informationen über alle Personen vorliegen, die sich gegenüber dem Zugangskontrollsystem ZKS identifiziert haben, um Zugang zum Seitenflügel G2.4 zu erhalten. Durch eine Abfrage der Datenbank DB wäre es nunmehr möglich, die Kommunikationsendgeräte KE zu ermitteln, die diesen Personen zugeordnet sind. Hierbei wäre es insbesondere möglich, nicht nur festnetzgebundene Kommunikationsendgeräte KE zu ermitteln, sondern darüber hinaus auch drahtlose Kommunikationsendgeräte KE, wie beispielsweise Mobiltelefone oder tragbare Kleincomputer, sog. Personal Digital Assistants, kurz PDA.

Vorteilhaft wird an alle Kommunikationsendgeräte K1...K4, die sich in unmittelbarer Nähe der Gefahrenquelle des fünften Raumes R5 aufhalten, eine Nachricht mit hoher Priorität übermittelt.

Neben der Auswahl bestimmter Kommunikationsendgeräte KE von potentiell gefährdeten Personen kommt auch die Auswahl von Kommunikationsendgeräten KE bestimmter Rettungskräfte in Frage, die zur Hilfeleistung beordert werden können. Wichtige Kriterien hierfür sind unter anderem:
- die Position des Notfalles und dessen relative Lage zu anderen Räumen R, Gebäudeteilen Gn.n, Gebäuden G, Ausgängen Ausg und Gebäude des Werkschutzes WS_Kompl mit Rettungskräften WS_Kompl,
- die Natur und das Ausmaß des Notfalles,
- die Anzahl der potentiell gefährdeten Personen im Gefahrenbereich GB, und
- die Verfügbarkeit von Rettungskräften.

Im Ausführungsbeispiel würde es sich unter Annahme eines in seinem Umfang begrenzten Zimmerbrandes im fünften Raum R5 anbieten, lediglich die Kommunikationsendgeräte KE der Rettungskräfte im Gebäude des Werkschutzes WS_Kompl1 auszuwählen, da sie für die Bekämpfung der begrenzten Gefahr ausreichend sind. Außerdem ist für sie der Weg, den sie bis zur Notfallstelle im fünften Raum R5 zurückzulegen haben, kürzer als z.B. für die Rettungskräfte im Gebäude des Werkschutzes WS_Kompl2 oder gar öffentliche Rettungskräfte außerhalb des Geländes.

Nachdem die zu informierenden Kommunikationsendgeräte KE ermittelt wurden, werden Notfallinformationen NI gebildet, die die Information enthalten, die an diese Kommunikationsendgeräte KE zu senden sind, siehe Figur 4.

Denkbar wäre zunächst die Bildung standardisierter Evakuierungs-, bzw. Fluchtweginformationen FW für gefährdete Personen, Figur 1 und 4. Diese könnten jedoch auch je nach Standort de Kommunikationsendgeräte KE individuell gebildet werden. Für die Kommunikationsendgeräte KE der Rettungskräfte können Anfahrtsweginformationen AW mit Hilfe der Ermittlungseinheit EM gebildet werden, Figur 1 und 4.

Diese Notfallinformationen NI beinhalten insbesondere Informationen über die Art der durch den Notruf N gemeldeten Gefahrensituation, die Dringlichkeit der bestehenden Gefahr, die zu ergreifenden Maßnahmen, die Dringlichkeit dieser zu ergreifenden Maßnahmen und außerdem Fluchtweginformationen zum Verlassen des definierten Gefahrenbereichs GB.

Nach der Bildung dieser Notfallinformationen NI werden diese durch das Übertragungsmodul ÜM über das Kommunikationsnetz KN an die identifizierten Kommunikationsendgeräte KE übermittelt. Alternativ kann auch eine Übermittlung der Notfallinformationen NI an Ausgabeeinrichtungen AE erfolgen, die im Gefahrenbereich GB angeordnet sind, Figur 4. Es kann sich hierbei insbesondere um Lautsprecher oder andere Warnsignalanlagen handeln. An die Kommunikationsendgeräte KE können die Notfallinformationen NI insbesondere in Form von Sprachnachrichten, Kurznachrichten, Short Message Service oder E-Mail erfolgen.

Ermittlungsmodul EM, Datenbank DB und Übermittlungsmodul ÜM können vorteilhaft in der Notrufzentrale NZ integriert sein, in Figur 4 durch eine gestrichelte, mit NZ bezeichnete Linie dargestellt.

Erfindungsgemäß kann die Position eines notrufenden Kommunikationsendgerätes KE auch anders ermittelt werden. Eine Alternative ist zum einen die Benutzung von Positionsbestimmungsverfahren, die auf Grundlage von RFID-Technik, WLAN oder DECT eine geografische Position, bzw. die Anwesenheit in einem räumlichen Bereich ermitteln. Zum anderen kann dies - insbesondere außerhalb von Gebäuden G - auch mittels eines mit dem Kommunikationsendgerät KE gekoppelten GPS-Systems erfolgen. Dabei kann das notrufende Kommunikationsendgerät KE entweder selbsttätig eine vom GPS-System gebildete Positionsinformation POS an die Notrufzentrale NZ übermitteln. Alternativ kann diese Übermittlung erst dann erfolgen, wenn zuvor eine Initialisierung dieser Funktion von der Notrufzentrale NZ aus erfolgt ist.

Das erfindungsgemäße Verfahren ist nicht auf das Ausführungsbeispiel beschränkt, sondern kann in allen Kommunikationsnetzen KN eingesetzt werden, die eine Positionsbestimmung zulassen, um Notrufe N von einem Kommunikationsendgerät KE zu behandeln.

## Patentansprüche

1. Verfahren zur Behandlung von Notrufen (N) von einem Kommunikationsendgerät (KE) in einer Notrufzentrale (NZ), wobei
a) ein Notruf eines notrufenden Kommunikationsendgeräts (KE) bei einer Notrufzentrale eingeht,
b) nach dem Erfassen des eingehenden Notrufs (N) in der Notrufzentrale (NZ) zunächst die Position des notrufenden Kommunikationsendgeräts (KE) aktuell ermittelt wird,
c) in der Notrufzentrale (NZ) um diese erfasste Position des notrufenden Kommunikationsendgeräts (KE) ein räumlicher Bereich als Gefahrenbereich (GB) in Abhängigkeit von der Natur des Notrufs (N), z.B. ein Brand, definiert wird,
d) mit Hilfe von Kommunikationsnetzen (KN) oder Lokalisierungseinrichtungen andere Kommunikationsendgeräte (KE) von betroffenen Personen und Rettungskräften identifiziert werden, die sich in dem definierten Gefahrenbereich (GB) aufhalten, und
e) Notfallinformationen (NI) in der Notrufzentrale (NZ) gebildet und an die folgenden Einrichtungen zielgerichtet übertragen werden:
• an das notrufende Kommunikationsendgerät (KE),
• an zumindest eines der in dem definierten Gefahrenbereich (GB) identifizierten anderen Kommunikationsendgeräte (KE), und
• an im definierten Gefahrenbereich (GB) angeordnete Ausgabeeinrichtungen (AE) per Warnsignal und/oder Lautsprecherdurchsagen,
f) wobei Evakuierungs- bzw. Fluchtweginformation (FW) zum Verlassen des Gefahrenbereichs für gefährdete Personen und Anfahrtsweginformation für die Rettungskräfte übertragen werden und
g) wobei die Identifikation von Kommunikationsendgeräten (KE) von Personen, die sich im definierten Gefahrenbereich (GB) aufhalten, durch die Verarbeitung von Informationen von einem Gebäude- oder Raumzugangskontrollsystem (ZKS) erfolgt.

2. Verfahren nach Anspruch 1, **dadurch gekennzeichnet, dass** die Notfallinformationen (NI) enthalten:
- die Art einer Gefahrensituation, und/oder
- die Dringlichkeit der bestehenden Gefahrensituation, und/oder
- die Art von zu ergreifenden Maßnahmen, und/oder
- die Dringlichkeit von zu ergreifenden Maßnahmen beschreiben.

3. Verfahren nach Anspruch 1 oder 2, **dadurch gekennzeichnet,**
- **dass** die Position des notrufenden Kommunikationsendgeräts (KE) und von Kommunikationsendgeräten (KE) im Gefahrenbereich (GB) mit Hilfe des Global Positioning Systems - GPS - und/oder von systeminherenten Positionsbestimmungsverfahren von drahtlosen oder drahtgebundenen Kommunikationsnetzen (KN), insbesondere GSM, UMTS, DECT, RFID oder WLAN-Netze, bestimmt wird, und
- **dass** eine die Position des notrufenden Kommunikationsendgerätes (KE) und von Kommunikationsendgeräten (KE) im Gefahrenbereich (GB) anzeigende Positionsinformation (POS) gebildet wird, und
- **dass** mit der Positionsinformation (POS) des notrufenden Kommunikationsendgeräts (KE) der Gefahrenbereich (GB) definiert wird.

4. Verfahren nach einem der Ansprüche 1 bis 3, **dadurch gekennzeichnet, dass** die Notfallinformationen (NI)
- an das notrufende und/oder die im Gefahrenbereich (GB) identifizierten Kommunikationsendgeräte (KE) durch Kommunikationsdienste wie Short Message Service, Multimedia Messaging Service, Sprachnachrichten oder E-Mail, und
- über die im Gefahrenbereich (GB) angeordneten Ausgabeeinrichtungen (AE) per Warnsignal und/oder Lautsprecherdurchsagen übertragen werden.

5. Verfahren nach einem der Ansprüche 1 bis 4, **dadurch gekennzeichnet, dass** an ausgewählte Kommunikationsendgeräte (KE) von Rettungskräften im und außerhalb des Gefahrenbereichs (GB) Notfallinformationen (NI) übermittelt werden, wobei die Auswahl von der Art der Gefahrensituation abhängig ist.

6. Verfahren nach Anspruch 5, **dadurch gekennzeichnet, dass** die Kommunikationsendgeräte (KE) von Rettungskräften in Abhängigkeit von ihrer Position ausgewählt werden.

7. Verfahren nach Anspruch 5 oder 6, **dadurch gekennzeichnet, dass** an Kommunikationsendgeräte (KE) der Rettungskräfte in Abhängigkeit von der Position des Gefahrenbereichs (GB) Anfahrtsweginformationen (AW) im Sinne einer Navigationshilfe übertragen werden.

8. Verfahren nach einem der Ansprüche 5 bis 7, **dadurch gekennzeichnet, dass** an Kommunikationsendgeräte (KE) der Rettungskräfte Notfallinformationen (NI) über
- die Natur der Gefahrensituation, und/oder
- das Ausmaß der Gefahrensituation, und/oder
- die mögliche Anzahl betroffener Personen übertragen werden.

9. Verfahren nach einem der Ansprüche 1 bis 8, **dadurch**
- **gekennzeichnet,**
- **dass** eine weitere Notrufinformation vom notrufenden Kommunikationsendgerät (KE), und/oder
- **dass** eine weitere Information, die eine Position repräsentiert, die von der aktuellen Position des notrufenden Kommunikationsendgerätes (KE) abweicht,
berücksichtigt wird.

10. Verfahren nach einem der Ansprüche 1 bis 9, **dadurch gekennzeichnet, dass** die Position des notrufenden Kommunikationsendgerätes (KE) auf einer den Gefahrenbereich (GB) repräsentierenden Darstellung abgebildet wird.

11. Notfallanordnung zur Behandlung von Notrufen (N) von einem Kommunikationsendgerät (KE) zur Durchführung eines Verfahrens nach einem der Ansprüche 1 bis 10,
- mit einer Notrufzentrale (NZ) und einer Datenbank (DB) zur Ermittlung der Position des notrufenden Kommunikationsendgerätes (KE),
- mit einem Ermittlungsmodul (EM) zur Definition eines räumlichen Bereichs als Gefahrenbereich (GB) um die Position des notrufenden Kommunikationsendgeräts (KE) in Abhängigkeit von der Natur des Notrufs (N), z.B. einem Brand, und
- mit Kommunikationsnetzen (KN) oder Lokalisierungseinrichtungen zur Identifikation von Kommunikationsendgeräten (KE), die sich im Gefahrenbereich (GB) aufhalten,
- wobei das Ermittlungsmodul (EM) zur Bildung und Übertragung von Notfallinformationen (NI) an die folgenden Einrichtungen zielgerichtet verwendet wird:
• an das notrufende Kommunikationsendgerät (KE),
• an Kommunikationsendgeräte (KE) der im Gefahrenbereich identifizierten Personen und Rettungskräfte, und
• an im Gefahrenbereich (GB) angeordnete Ausgabeeinrichtungen (AE) per Warnsignal und/oder Lautsprecherdurchsagen,
- wobei Evakuierungs- bzw. Fluchtweginformation (FW) zum Verlassen des Gefahrenbereichs für gefährdete Personen und Anfahrtsweginformation für die Rettungskräfte übertragen werden und
- wobei die Identifikation von Kommunikationsendgeräten (KE) von Personen, die sich im definierten Gefahrenbereich (GB) aufhalten, durch die Verarbeitung von Informationen von einem Gebäude- oder Raumzugangskontrollsystem (ZKS) erfolgt.

12. Notfallanordnung nach Anspruch 11 mit einem Initialisierungsmodul zum Initialisieren von Global Positioning Systemen, GPS, und/oder von systeminherenten Positionsbestimmungsverfahren in den Kommunikationsendgeräten (KE) oder Kommunikationsnetzen (KN).

13. Notfallanordnung nach Anspruch 11, **dadurch gekennzeichnet, dass** Mittel zur Berücksichtigung von
- Art der Gefahrensituation, und/oder
- Dringlichkeit der bestehenden Gefahrensituation, und/oder
- Art von zu ergreifenden Maßnahmen, und/oder
- Dringlichkeit von zu ergreifenden Maßnahmen beschreiben, und
- Fluchtweginformationen (FW) zum Verlassen des Gefahrenbereichs (GB), und
- Anfahrtsweginformationen (AW) zum Erreichen des Gefahrenbereichs (GB),
bei der Bildung und Übertragung der Notfallinformationen (NI) vorgesehen sind.

14. Notfallanordnung nach einem der Ansprüche 11 bis 13, **dadurch gekennzeichnet, dass** ein Übertragungsmodul (ÜM) zur Übertragung der Notfallinformationen (NI) an Kommunikationsendgeräte (KE) der identifizierten Personen über andere Kommunikationsdienste, insbesondere Kommunikationsdienste wie Short Message Service, Multimedia Messaging Service, drahtlos übertragene Sprachnachrichten oder E-Mail, und an die im Gefahrenbereich (GB) angeordneten Ausgabeeinrichtungen (AE) per Warnsignal und/oder Lautsprecherdurchsagen vorgesehen ist.

15. Notrufzentrale zur Behandlung von Notrufen (N) von einem Kommunikationsendgerät (KE) zur Durchführung eines Verfahrens nach einem der Ansprüche 1 bis 10,
- mit einer Datenbank (DB) zum Erfassen von Positionsinformationen (POS) des notrufenden Kommunikationsendgeräts (KE),
- mit einem Ermittlungsmodul (EM)
• zum Definieren des Gefahrenbereichs (GB) in Abhängigkeit von der Natur des Notrufs (N), z.B. ein Brand,
• zur Identifikation der Kommunikationsendgeräte (KE) von Personen, die sich im definierten Gefahrenbereich (GB) aufhalten, mit Hilfe von Kommunikationsnetzen (KN) oder Lokalisierungseinrichtungen, und
• zum Bilden und Übertragen von Notfallinformationen (NI) an Kommunikationsendgeräte (KE) der im Gefahrenbereich identifizierten Personen und Rettungskräfte an im Gefahrenbereich (GB) angeordnete Ausgabeeinrichtungen (AE),
- wobei Notfallinformationen (NI) in der Notrufzentrale (NZ) gebildet und an die folgenden Einrichtungen zielgerichtet übertragen werden:
• an das notrufende Kommunikationsendgerät (KE),
• an zumindest eines der in dem definierten Gefahrenbereich (GB) identifizierten anderen Kommunikationsendgeräte (KE), und
• an im definierten Gefahrenbereich (GB) angeordnete Ausgabeeinrichtungen (AE) per Warnsignal und/oder Lautsprecherdurchsagen,
- wobei Evakuierungs- bzw. Fluchtweginformation (FW) zum Verlassen des Gefahrenbereichs für gefährdete Personen und Anfahrtsweginformation für die Rettungskräfte übertragen werden und
- wobei die Identifikation von Kommunikationsendgeräten (KE) von Personen, die sich im definierten Gefahrenbereich (GB) aufhalten, durch die Verarbeitung von Informationen von einem Gebäude- oder Raumzugangskontrollsystem (ZKS) erfolgt.

16. Notrufzentrale nach Anspruch 15 mit einem Initialisierungsmodul zum Initialisieren von Global Positioning Systemen, GPS, und/oder von systeminherenten Positionsbestimmungsverfahren in den Kommunikationsendgeräten (KE) oder Kommunikationsnetzen (KN).

17. Notrufzentrale nach Anspruch 15 oder 16, **dadurch gekennzeichnet, dass** Mittel zur Berücksichtigung von
- Art der Gefahrensituation, und/oder
- Dringlichkeit der bestehenden Gefahrensituation, und/oder
- Art von zu ergreifenden Maßnahmen, und/oder
- Dringlichkeit von zu ergreifenden Maßnahmen beschreiben, und
- Fluchtweginformationen (FW) zum Verlassen des Gefahrenbereichs (GB), und
- Anfahrtsweginformationen (AW) zum Erreichen des Gefahrenbereichs (GB),
bei der Bildung und Übertragung der Notfallinformationen (NI) vorgesehen sind.

18. Notrufzentrale nach einem der Ansprüche 15 bis 17, **dadurch gekennzeichnet, dass** ein Übertragungsmodul (ÜM) zur Übertragung der Notfallinformationen (NI) an Kommunikationsendgeräte (KE) der identifizierten Personen über andere Kommunikationsdienste, insbesondere Kommunikationsdienste wie Short Message Service, Multimedia Messaging Service, drahtlos übertragene Sprachnachrichten oder E-Mail und an die im Gefahrenbereich (GB) angeordneten Ausgabeeinrichtungen (AE) per Warnsignal und/oder Lautsprecherdurchsagen vorgesehen ist.

## Claims

1. A method for handling emergency calls (N) from a communication terminal (KE) in an emergency call center (NZ), wherein
a) an emergency call of a communication terminal (KE) making an emergency call is incoming in an emergency call center,
b) after the acquisition of the incoming emergency call (N) in the emergency call center (NZ), the current position of the communication terminal (KE) making the emergency call is first determined,
c) in the emergency call center (NZ), around this acquired position of the communication terminal (KE) making an emergency call, a spatial area is defined as danger area (GB), depending on the nature of the emergency call (N), for example, a fire,
d) with the aid of communication networks (KN) or localization devices, other communication terminals (KE) of affected persons and rescue forces are identified, which are located in the defined danger area (GB), and
e) emergency information (NI) is generated in the emergency call center (NZ) and transmitted in a targeted manner to the following devices:
• to the communication terminal (KE) making an emergency call,
• to at least one of the other communication terminals (KE) identified in the defined danger area (GB), and
• to warning signal and/or loudspeaker announcement output devices (AE) arranged in the defined danger area (GB),
f) wherein evacuation and escape route information (FW) for exiting the danger area is transmitted for persons who are at risk and access route information is transmitted for the rescue forces, and
g) wherein the identification of communication terminals (KE) of persons who are located in the defined danger area (GB) occurs by the processing of information from a building or room access control system (ZKS).

2. The method according to Claim 1, **characterized in that** the emergency information (NI) comprises:
- the type of a danger situation and/or
- the urgency of the existing danger situation and/or
- the type of measures to be taken, and/or
- describes the urgency of measures to be taken.

3. The method according to Claim 1 or 2, **characterized in that**
- the position of the communication terminal (KE) making an emergency call and of communication terminals (KE) in the danger area (GB) is determined by means of the global positioning system - GPS - and/or by means of system-inherent position determination methods of wireless or wire-based communication networks (KN), in particular GSM, UMTS, DECT, RFID or WLAN networks, and
- position information (POS) indicating the position of the communication terminal (KE) making an emergency call and of communication terminals (KE) in the danger area (GB) is generated, and
- the danger area (GB) is defined with the position information (POS) of the communication terminal (KE) making an emergency call.

4. The method according to any one of Claims 1 to 3, **characterized in that** the emergency information (NI)
- is transmitted to the communication terminal (KE) making an emergency call and/or the communication terminals (KE) identified in the danger area (GB) by communication services such as Short Message Service, Multimedia Messaging Service, voice messages or email, and
- via the output devices (AE) arranged in the danger area (GB) per warning signal and/or loudspeaker announcements.

5. The method according to any one of Claims 1 to 4, **characterized in that** emergency information (NI) is transmitted to selected communication terminals (KE) of rescue forces in and outside of the danger area (GB), wherein the selection depends on the type of the danger situation.

6. The method according to Claim 5, **characterized in that** the communication terminals (KE) of rescue forces are selected depending on the position of said rescue forces.

7. The method according to Claim 5 or 6, **characterized in that** access route information (AW), for the purpose of a navigation aid, is transmitted to communication terminals (KE) of the rescue forces depending on the position of the danger area (GB).

8. The method according to any one of Claims 5 to 7, **characterized in that** emergency information (NI) on
- the nature of the danger situation and/or
- the extent of the danger situation and/or
- the potential number of persons affected is transmitted to communication terminals (KE) of the rescue forces.

9. The method according to any one of Claims 1 to 8, **characterized in that**
- additional emergency information from the communication terminal (KE) making an emergency call is taken into consideration, and/or
- additional information representing a position which deviates from the current position of the communication terminal (KE) making an emergency call is taken into consideration.

10. The method according to any one of Claims 1 to 9, **characterized in that** the position of the communication terminal (KE) making an emergency call is reproduced on a representation representing the danger area (GB).

11. An emergency arrangement for handling emergency calls (N) from a communication terminal (KE), for carrying out a method according to any one of Claims 1 to 10,
- with an emergency call center (NZ) and with a database (DB) for the determination of the position of the communication terminal (KE) making an emergency call,
- with a determination module (EM) for the definition of a spatial area as danger area (GB) around the position of the communication terminal (KE) making an emergency call, depending on the nature of the emergency call (N), for example, a fire, and
- with communication networks (KN) or localization devices for the identification of communication terminals (KE) located in the danger area (GB),
- wherein the determination module (EM) is used in a targeted manner for the generation and transmission of emergency information (NI) to the following devices:
• to the communication terminal (KE) making an emergency call,
• to communication terminals (KE) of the persons and rescue forces identified in the danger area, and
• to output devices (AE) arranged in the danger area (GB) per warning signal and/or loudspeaker announcements,
- wherein evacuation and escape route information (FW) for exiting the danger area is transmitted for at-risk persons and access route information is transmitted for the rescue forces, and
- wherein the identification of communication terminals (KE) of persons located in the defined danger area (GB) occurs by the processing of information from a building or room access control system (ZKS).

12. The emergency arrangement according to Claim 11 with an initialization module for initializing global positioning systems, GPS, and/or system-inherent position determination methods in the communication terminals (KE) or communication networks (KN).

13. The emergency arrangement according to Claim 11, **characterized in that** means for taking into consideration
- the type of the danger situation and/or
- the urgency of the existing danger situation and/or
- the type of measures to be taken, and/or
- the urgency of measures to be taken are described, and
- escape route information (FW) for leaving the danger area (GB) and
- access route information (AW) for reaching the danger area (GB)
are provided in the generation and transmission of the emergency information (NI).

14. The emergency arrangement according to any one of Claims 11 to 13, **characterized in that** a transmission module (ÜM) is provided for the transmission of the emergency information (NI) to communication terminals (KE) of the identified persons via other communication services, in particular communication services such as Short Message Service, Multimedia Messaging Service, wirelessly transmitted voice messages or email, and to the output devices (AE) arranged in the danger area (GB) per warning signal and/or loudspeaker announcements.

15. An emergency call center for handling emergency calls (N) from a communication terminal (KE), for carrying out a method according to any one of Claims 1 to 10,
- with a database (DB) for the acquisition of position information (POS) of the communication terminal (KE) making an emergency call,
- with a determination module (EM)
• for defining the danger area (GB) depending on the nature of the emergency call (N), for example, fire,
• for the identification of the communication terminals (KE) of persons located in the defined danger area (GB), by means of communication networks (KN) or localization devices, and
• for the generation and transmission of emergency information (NI) to communication terminals (KE) of the persons and rescue forces identified in the danger area and to output devices (AE) arranged in the danger area (GB),
- wherein emergency information (NI) is generated in the emergency call center (NZ) and transmitted in a targeted manner to the following devices:
• to the communication terminal (KE) making an emergency call,
• to at least one of the other communication terminals (KE) identified in the defined danger area (GB), and
• to output devices (AE) arranged in the defined danger area (GB) per warning signal and/or loudspeaker announcements,
- wherein evacuation and escape route information (FW) for exiting the danger area is transmitted for at-risk persons and access route information is transmitted for the rescue forces, and
- wherein the identification of communication terminals (KE) of persons located in the defined danger area (GB) occurs by the processing of information from a building or room access control system (ZKS).

16. The emergency call center according to Claim 15 with an initialization module for initializing global positioning systems, GPS, and/or system-inherent position determination methods in the communication terminals (KE) or communication networks (KN).

17. The emergency call center according to Claim 15 or 16, **characterized in that** means for taking into consideration
- the type of danger situation and/or
- the urgency of the existing danger situation and/or
- the type of measures to be taken and/or
- the urgency of measures to be taken are described, and
- escape route information (FW) for leaving the danger area (GB) and
- access route information (AW) for reaching the danger area (GB)
are provided in the generation and transmission of emergency information (NI).

18. The emergency call center according to any one of Claims 15 to 17, **characterized in that** a transmission module (ÜM) is provided for the transmission of the emergency information (NI) to communication terminals (KE) of the identified persons via other communication services, in particular via communication services such as Short Message Service, Multimedia Messaging Service, wirelessly transmitted voice messages or email, and to warning signal and/or loudspeaker announcement output devices (AE) arranged in the danger area (GB).

## Revendications

1. Procédé pour le traitement d'appels d'urgence (N) d'un terminal de communication (KE) dans une centrale d'appels d'urgence (NZ), dans lequel
a) un appel d'urgence d'un terminal de communication auteur de l'appel d'urgence (KE) arrive à une centrale d'appels d'urgence,
b) après la détection de l'appel d'urgence (N) entrant dans la centrale d'appels d'urgence (NZ), la position du terminal de communication auteur de l'appel d'urgence (KE) est d'abord effectivement établie,
c) dans la centrale d'appels d'urgence (NZ) autour de cette position détectée du terminal de communication auteur de l'appel d'urgence (KE) une zone géographiquezone géographique est définiecomme zone dangereuse (GB) en fonction de la nature de l'appel d'urgence (N), par exemple, un incendie,
d) à l'aide de réseaux de communication (KN) ou d'appareils de localisation, sont identifiés d'autres terminaux de communication (KE) de personnes concernées et de forces de secours, qui se tiennent dans la zone dangereuse (GB) définie, et
e) des informations de secours (NI) sont formées dans la centrale d'appels d'urgence (NZ) et transmises de manière ciblée aux appareils suivants :
• au terminal de communication auteur de l'appel d'urgence (KE),
• à au moins un des autres terminaux de communication (KE) identifiés dans la zone dangereuse (GB) définie, et
• à des appareils de sortie (AE) disposés dans la zone dangereuse (GB) définie par signal d'avertissement et/ou annonces par haut-parleur,
f) dans lequel sont transmises des informations d'évacuation ou d'issue de secours (FW) pour la sortie de personnes en danger de la zone dangereuse et des informations de chemin d'accès destinées aux forces de secours et
g) dans lequel l'identification des terminaux de communication (KE) de personnes, qui se tiennent dans la zone dangereuse (GB) définie, est effectuée par le biais du traitement d'informations d'un système de contrôle d'accès d'immeuble ou de salle (ZKS).

2. Procédé selon la revendication 1, **caractérisé en ce que** les informations de secours (NI) contiennent :
- le type de situation dangereuse, et/ou
- l'urgence de la situation dangereuse présente, et/ou
- le type de mesures à prendre et/ou
- l'urgence des mesures à prendre.

3. Procédé selon la revendication 1 ou 2, **caractérisé**
- **en ce que** la position du terminal de communication auteur de l'appel d'urgence (KE) et des terminaux de communication (KE) dans la zone dangereuse (GB) est déterminée à l'aide du système de positionnement mondial - GPS - et/ou de procédés de détermination de position internes au système par des réseaux de communication (KN) sans fil ou reliés par fils, en particulier GSM, UMTS, DECT, RFID ou des réseaux WLAN, et
- **en ce qu'**est formée une information de position (POS) indiquant la position du terminal de communication auteur de l'appel d'urgence (KE) et des terminaux de communication (KE) dans la zone dangereuse (GB), et
- **en ce que** la zone dangereuse (GB) est définie avec l'information de position (POS) du terminal de communication (KE) auteur de l'appel d'urgence.

4. Procédé selon l'une quelconque des revendications 1 à 3, **caractérisé en ce que** les informations de secours (NI) sont transmises
- au terminal de communication (KE) auteur de l'appel d'urgence et/ou aux terminaux de communication (KE) identifiés dans la zone dangereuse (GB) par des services de communication comme un service de minimessages, un service de messagerie multimédia, des messages vocaux ou des courriers électroniques, et
- par un signal d'avertissement et/ou des annonces par haut-parleur par le biais des appareils de sortie (AE) disposés dans la zone dangereuse (GB).

5. Procédé selon l'une quelconque des revendications 1 à 4, **caractérisé en ce que** des informations de secours (NI) sont communiquées à des terminaux de communication (KE) sélectionnés de forces de secours à l'intérieur et à l'extérieur de la zone dangereuse (GB), dans lequel la sélection dépend du type de situation dangereuse.

6. Procédé selon la revendication 5, **caractérisé en ce que** les terminaux de communication (KE) des forces de secours sont sélectionnés en fonction de leur position.

7. Procédé selon la revendication 5 ou 6, **caractérisé en ce que** des informations de chemin d'accès (AW) sous forme d'aide à la navigation sont transmises à des terminaux de communication (KE) des forces de secours en fonction de la position de la zone dangereuse (GB).

8. Procédé selon l'une quelconque des revendications 5 à 7, **caractérisé en ce que** des informations de secours (NI) sur
- la nature de la situation dangereuse, et/ou
- l'étendue de la situation dangereuse, et/ou
- le nombre éventuel de personnes concernées
sont transmises à des terminaux de communication (KE) des forces de secours.

9. Procédé selon l'une quelconque des revendications 1 à 8, **caractérisé en ce qu'**il est pris en compte
- une autre information d'appel d'urgence du terminal de communication auteur de l'appel d'urgence (KE), et/ou
- une autre information qui représente une position qui diverge de la position actuelle du terminal de communication auteur de l'appel d'urgence (KE).

10. Procédé selon l'une quelconque des revendications 1 à 9, **caractérisé en ce que** la position du terminal de communication auteur de l'appel d'urgence (KE) est reproduite sur une représentation montrant la zone dangereuse (GB).

11. Dispositif de secours destiné au traitement d'appels d'urgence (N) d'un terminal de communication (KE) pour l'exécution d'un procédé selon l'une quelconque des revendications 1 à 10,
- avec une centrale d'appels d'urgence (NZ) et une base de données (DB) pour l'établissement de la position du terminal de communication auteur de l'appel d'urgence (KE),
- avec un module d'établissement (EM) pour la définition d'une zone géographiquee comme zone dangereuse (GB) autour de la position du terminal de communication auteur de l'appel d'urgence (KE) en fonction de la nature de l'appel d'urgence (N), par exemple un incendie, et
- avec des réseaux de communication (KN) ou des appareils de localisation pour l'identification de terminaux de communication (KE) qui se trouvent dans la zone dangereuse (GB),
- dans lequel le module d'établissement (EM) est employé de manière ciblée pour la formation et la transmission d'informations de secours (NI) aux appareils suivants :
• au terminal de communication auteur de l'appel d'urgence (KE),
• à des terminaux de communication (KE) des personnes et des forces de secours identifiées dans la zone dangereuse, et
• à des appareils de sortie (AE) disposés dans la zone dangereuse (GB) par signal d'avertissement et/ou annonces par haut-parleur,
- dans lequel sont transmises des informations d'évacuation ou d'issue de secours (FW) pour la sortie de personnes en danger de la zone dangereuse et des informations de voie d'accès destinées aux forces de secours et
- dans lequel l'identification de terminaux de communication (KE) de personnes, qui se tiennent dans la zone dangereuse (GB) définie, est effectuée par le biais du traitement d'informations d'un système de contrôle d'accès d'immeuble ou de salle (ZKS).

12. Dispositif de secours selon la revendication 11 avec un module d'initialisation pour l'initialisation de systèmes de positionnement mondial, GPS, et/ou de procédés de détermination de position internes au système dans les terminaux de communication (KE) ou les réseaux de communication (KN).

13. Dispositif de secours selon la revendication 11, **caractérisé en ce que**, lors de la formation et de la transmission des informations de secours (NI), il est prévu des moyens pour prendre en compte
- le type de situation dangereuse, et/ou
- l'urgence de la situation dangereuse présente, et/ou
- le type de mesures à prendre, et/ou
- l'urgence des mesures à prendre, et
- des informations d'issue de secours (FW) pour la sortie de la zone dangereuse (GB), et
- des informations de voie d'accès (AW) pour atteindre la zone dangereuse (GB).

14. Dispositif de secours selon l'une quelconque des revendications 11 à 13, **caractérisé en ce qu'**il est prévu un module de transmission (UM) pour la transmission des informations de secours (NI) à des terminaux de communication (KE) des personnes identifiées par le biais d'autres services de communication, en particulier des services de communication comme un service de minimessages, un service de messagerie multimédia, des messages vocaux transmis sans fil ou des courriers électroniques, et aux appareils de sortie (AE) disposés dans la zone dangereuse (GB) par signal d'avertissement et/ou annonces par haut-parleur.

15. Centrale d'appels d'urgence pour le traitement d'appels d'urgence (N) par un terminal de communication (KE) pour l'exécution d'un procédé selon l'une quelconque des revendications 1 à 10,
- avec une base de données (DB) pour la détection d'informations de position (POS) du terminal de communication (KE) auteur de l'appel d'urgence,
- avec un module d'établissement (EM)
• pour la définition de la zone dangereuse (GB) en fonction de la nature de l'appel d'urgence (N), par exemple un incendie,
• pour l'identification des terminaux de communication (KE) de personnes, qui se trouvent dans la zone dangereuse (GB) définie, à l'aide de réseaux de communication (KN) ou d'appareils de localisation, et
• pour la formation et la transmission d'informations de secours (NI) à des terminaux de communication (KE) des personnes et des forces de secours identifiées dans la zone dangereuse et à des appareils de sortie (AE) disposés dans la zone dangereuse (GB),
- des informations de secours (NI) étant formées dans la centrale d'appels d'urgence (NZ) et sont transmises aux appareils suivants de manière ciblée :
• au terminal de communication auteur de l'appel d'urgence (KE),
• à au moins un des autres terminaux de communication (KE) identifiés dans la zone dangereuse (GB) définie, et
• à des appareils de sortie (AE) disposés dans la zone dangereuse (GB) définie par signal d'avertissement et/ou annonces par haut-parleur,
- dans laquelle les informations d'évacuation ou d'issue de secours (FW) pour la sortie de personnes en danger de la zone dangereuse et des informations de voie d'accès destinées aux forces de secours sont transmises et
- dans laquelle l'identification de terminaux de communication (KE) des personnes, qui se tiennent dans la zone dangereuse (GB) définie, est effectuée par le traitement d'informations d'un système de contrôle d'accès d'immeuble ou de salle (ZKS).

16. Centrale d'appels d'urgence selon la revendication 15 avec un module d'initialisation pour l'initialisation de systèmes de positionnement mondial, GPS, et/ou de procédés de détermination de position internes au système dans les terminaux de communication (KE) ou les réseaux de communication (KN).

17. Centrale d'appels d'urgence selon la revendication 15 ou 16, **caractérisée en ce que** sont prévus des moyens pour prendre en compte
- le type de situation dangereuse, et/ou
- l'urgence de la situation dangereuse présente, et/ou
- le type de mesures à prendre, et/ou
- l'urgence des mesures à prendre, et
- des informations d'issue de secours (FW) pour la sortie de la zone dangereuse (GB), et
- des informations de voie d'accès (AW) pour atteindre la zone dangereuse (GB) lors de la formation et de la transmission des informations de secours (NI).

18. Centrale d'appels d'urgence selon l'une quelconque des revendications 15 à 17, **caractérisée en ce qu'**un module de transmission (UM) est prévu pour la transmission des informations de secours (NI) à des terminaux de communication (KE) des personnes identifiées par le biais d'autres services de communication, en particulier des services de communication comme un service de minimessages, un service de messagerie multimédia, des messages vocaux transmis sans fil ou des courriers électroniques, et à des appareils de sortie (AE) disposés dans la zone dangereuse (GB) par signal d'avertissement et/ou annonces par haut-parleur.
